# EUROPEAN PATENT APPLICATION

(11) **EP 4 417 061 A1**
(43) Date of publication of application: **21.08.2024**
(21) Application number: 21960506.0
(22) Date of filing: 14.10.2021
(51) Int. Cl.: A23K 20/142, A23K 50/75

(54) **FOOD SUPPLEMENT FOR ANIMALS, PREPARATION METHOD THEREOF AND USE OF SAME**

(71) Applicant: Adibio, S.l., 44002 TERUEL (ES)
(72) Inventor: MARTÍN ATANCE, Pablo, 44002 TERUEL (ES); MACÍAS VIDAL, Judit, 44002 TERUEL (ES)
(74) Representative: González López-Menchero, Álvaro Luis
(86) International application number: PCT/ES2021/070748
(87) International publication number: WO 2023/062251

(57) **Abstract**

The invention provides a food supplement for animals based on a raw garlic extract (Allium sativum) that is stabilised in an allicin-free acetic solution with high alliin content. Thus, the natural enzymatic reactions of the alliin-alliinase system, which result in allicin, do not occur in the food supplement of the invention, so that once the supplement is administered to the animal, the conversion from alliin to allicin occurs inside said animal, causing its effects (biosynthesis) therein. The preparation method of the supplement, as well as its use in animal feed is also provided.

## Description

The present invention relates to a food supplement for animals, a preparation method thereof, as well as use thereof in animal feed, being applicable in the field of animal nutrition, for example as a liquid supplement to be administered with the drinking water of the animals or mixed with food, to promote circulatory system function and prevent vascular lesions in muscle tissues.

More specifically, the invention provides a food supplement for animals based on a raw garlic extract (*Allium sativum*) that is stabilised in an allicin-free acetic solution with high alliin content. Thus, the natural enzymatic reactions of the alliin-alliinase system, which result in allicin, do not occur in the food supplement of the invention, so that once the supplement is administered to the animal, it ensures the bioavailability (dose-dependent plasma concentrations) of S-allylcysteine and alliin. At the same time, it modifies the metabolism of sulphur compounds in animals by regulating S-methyl-L-cysteine levels and alliin-allicin conversion (biosynthesis) in the blood plasma. Its effects at this level translate into reduced alterations due to petechiae, bleeding or suffusions in the breast meat of poultries fed with the supplement.

Another object of the invention is the preparation method of the food supplement based on a raw *Allium sativum* extract that is stabilised in an allicin-free acetic solution with high alliin content, as well as the use of said supplement for and in animal nutrition.

Alliin (S-allylcysteine sulfoxide) is the most abundant sulphur compound in garlic which can reach concentrations of 7 to 14 mg/g fresh (18 to 42 mg/g dry weight). It is odourless and stable in aqueous solutions and at elevated temperatures (A. Stoll, E. Seebeck, Chemical investigation on alliin, the specific pinciple of garlic, Adv. Enzymol. 11 (1951) 377^400). It is found in cell cytoplasm, physically separated from the alliinase (C-S lyase) enzyme which is located in vacuoles (Kuettner EB, Hilgenfeld R, Weiss MS (2002). Purification, characterization, and crystallization of alliinase from garlic. Arch Biochem. Biophys. 402: 192-200) and catalyses alliin conversion into pyruvic acid, ammonia and allyl-sulfenic acid when the cell structure breaks upon rupturing, cutting or crushing the bulb.

Alliinase makes up about 11% of the soluble protein material in garlic. On contact with air, it can catalyse the conversion of alliin in less than ten seconds (LD Lawson, ZJ Wang (2005) Allicin and Allicin-Derived Garlic Compounds Increase Breath Acetone through Allyl Methyl Sulfide: Use in Measuring Allicin Bioavailability J. Agric. Food Chem. 53, 6, 1974-1983), although this enzymatic activity usually takes between 0.2 and 0.5 minutes, conditioned by environmental conditions: it requires warm temperatures (35°C to 47°C) and neutral or alkaline pH ranges (from 4.5 to 9). Heat (above 42°C) negatively affects its function and structure (at 60°C), and it is quickly and irreversibly inactivated in highly acidic media (pH 1.5 to 3) (Krest, I; Glodek, J; Keusgen, M (2000) Cysteine sulfoxides and alliinase activity of some Allium species Journal of Agricultural and Food Chemistry 48 (8), 3753-3760).

After the enzymatic conversion of alliin, the resulting allyl-sulfenic acid (which is unstable and highly reactive at room temperature) is converted, by the condensation of two molecules, into water and allicin (diallyl-thiosulfinate) (Dušica P. Ilić, Vesna D. Nikolić, Ljubiša B. Nikolić, Mihajlo Z. Stanković, Ljiljana P. Stanojević, Milorad D. Cakić (2011) ALLICIN AND RELATED COMPOUNDS: BIOSYNTHESIS, SYNTHESIS AND PHARMACOLOGICAL ACTIVITY. FACTA UNIVERSITATIS. Series: Physics, Chemistry and Technology Vol. 9, No 1, 2011, pages 9 - 20). This allyl-thiosulfinate is a reactive sulphur species with oxidative properties on thiol groups, such as glutathione and cysteine (Rabinkov A, T Miron, L Konstantinovski, M Wilchek, D Mirelman, L Weiner (1998). The mode of action of allicin: trapping of radicals and interaction with thiol containing proteins. Biochim Biophys Acta; 1379(2):233-44), which can induce changes (due to the formation of disulfide bonds) in protein structures sensitive to these REDOX reactions (Gruhlke, M.C.H.; Slusarenko, A.J. The biology of reactive sulfur species (RSS). Plant Physiol. Biochem. 2012, 59, 98-107) in which a loss or gain of function occurs (Buelna-Chontal, M.; Zazueta, C. Redox activation of Nrf2 & NF-κB: A double end sword? Cell Signal. 2013, 25, 2548-2557). The main nutraceutical properties of this compound are attributed to this mechanism of action, with antithrombotic, hypotensive, antimicrobial (antiviral, antibacterial and antifungal), immunomodulatory and anticancer effects (Lopez Luengo MT (2007). Garlic. Pharmacological properties and therapeutic indications. Pharmaceutical Field. Phytotherapy 26, 78-81). However, its use for such purposes is limited to the field of research, as it is a very unstable compound.

Although different methods have been studied for stabilising allicin in water solutions, acid solutions, solutions with solvents (dichloromethane, methanol, chloroform, ethanol, acetonitrile), through the incorporation thereof in a hydrophobic gel matrix or the formation of complexes with cyclodextrins, this compound degrades rapidly into other thiosulfinates, such as disulfides (diallyl disulfide, allyl-methyl-disulfide), polysulfides (diallyl trisulfide, allyl-methyl-trisulfide), vinyldithiins (2-vinyl[4H]-1,3-dithiin, 3-vinyl[4H]-1,2-dithiin) or ajoenes (E,Z), depending on environmental conditions.

In products obtained from the conversion of raw garlic, the amount and relative proportion of these volatile sulphur compounds is the basis of their aroma and nutraceutical properties. This profile defines its phytochemical value and applications, the importance of which is highlighted with functionality claims associated with the compounds they concentrate (Cañizares, P., Gracia, I., Gomez, L.A., Martin de Argila, C., de Rafael, L. and Garcia, A. (2002) Optimization of Allium sativum Solvent Extraction for the Inhibition of in Vitro Growth of Helicobacter pylori. Biotechnology Progress, 18, 1227-1232; Turos, E., Revell, K. D., Ramaraju, P., Gergeres, D. A., Greenhalgh, K., Young, A., Sathyanarayan, N., Dickey, S., Lim, D., Alhamadsheh, M. M., & Reynolds, K. (2008). Unsymmetric aryl-alkyl disulfide growth inhibitors of methicillin-resistant Staphylococcus aureus and Bacillus anthracis. Bioorganic & medicinal chemistry, 16(13), 6501-6508; Yamada N, Hattori A, Hayashi T, Nishikawa T, Fukuda H, Fujino T. 2004. Improvement of scopolamine-induced memory impairment by Z-ajoene in the water maze in mice. Pharmacol Biochem Behav.78(4):787-91). The composition of each preparation depends on the conditions in which the vegetable raw material is processed.

Several methods defined for increasing the proportion of thiosulfinates in the end product, such as essential oils and garlic extracts, which are obtained by distillation with steam stripping, with solvents or supercritical carbon dioxide are known from the state of the art (see, for example, documents CN1555728A, CN101117053A, CN1124591A or CN1818045A). There are also other extraction methods with more complex organic solvents, involving the application of ultrasound or microwaves in combination (CN101243871 B, CN103436564A).

In contrast to the approach of technological processes intended for obtaining liquid essences with a high allicin content, other developments are proposed to concentrate alliin and condition it in the most stable way possible, that is, in a solid form, usually as lyophilised powder. Document CN1203057C discloses a method for extracting alliin from fresh garlic, providing a product with an alliin content greater than 90% by weight. This method consists essentially of enzymatic destruction with microwaves, extraction with ethanol, concentration of alliin by means of a cation exchange resin, desorption of alliin from the resin with ammonia water, low-pressure concentration with ethanol, and precipitation at a pH between 5.5 and 6.5 to obtain alliin crystals.

The present invention is founded on a very different approach based on the extraction of the liquid fraction of *A. sativum* bulb by means of a cold expression process and its stabilisation in an acetic solution conditioned to prevent the biosynthesis of allicin, which concentrates non-volatile cysteine-derived sulphur compounds, for oral dosing to poultries for the purpose of ensuring the bioavailability of both alliin and S-allylcysteine, modulating allicin biosynthesis in blood plasma, and reducing the total oxidative level at the circulatory level.

In a first main aspect, the invention provides a food supplement based on a raw garlic extract (*Allium sativum*) that is stabilised in an allicin-free acetic solution with high alliin content. Thus, a food supplement in which the natural enzymatic reactions of the alliin-alliinase system are interrupted is provided, so the bioavailability of allicin in blood plasma is deduced from a synthesis mechanism alternative to the one described in garlic and which implies the possible ability of poultries to exhibit a metabolic activity with a similar result, which could be due to the absorption (at the intestinal level) and partial reactivation of alliinases that the ingested garlic derivative may contain, use other enzymes to metabolise S-allyl compounds (alliin, glutamyl-S-allylcysteine, S-allylcysteine, etc.). Based on these hypotheses which were proposed from scientific research conducted in humans and other animal models (rats), the examples mentioned below demonstrate that only allicin degradation metabolites are detected in blood plasma, thereby suggesting an association with proteins involved as factors of the blood clotting cascade.

The food supplement of the invention has a non-volatile cysteine-derived sulphur compound content in a range of 1 to 10% by weight with respect to the total mass of the supplement of the invention, consisting of γ-glutamyl-S-allylcysteine, N-γ-glutamyl-S-(1-propenyl)cysteine, γ-glutamyl-S-allylthiocysteine, N-acetyl-S-(N methylcarbamoyl)cysteine, γ-L-glutamyl-S-(2-carboxy-1-propyl)cysteinylglycine, alliin, S-methylcysteine, propane-1-sulfonothioic acid or N-acetylmethionine sulfoxide and is allicin-free, according to the following biochemical profile:

| Non-volatile cysteine-derived sulphur compounds | mg/kg of supplement |
|---|---|
| γ-Glutamyl-S-allylcysteine | 10000-50000 |
| N-γ-glutamyl-S-(1-propenyl)cysteine | 8000-24000 |
| γ-glutamyl-S-allylthiocysteine | 4000-12000 |
| N-acetyl-S-(N-methylcarbamoyl)cysteine | 200-400 |
| γ-L-glutamyl-S-(2-carboxy-1-propyl)cysteinylglycine | 200-400 |
| Alliin | 100-300 |
| S-methylcysteine | 100-200 |
| Propane-1-sulfonothioic acid | 100-200 |
| N-acetylmethionine sulfoxide | 50-150 |
| Total (mg/kg) | 22750-87650 |
| % (total mass) | 2.3-8.8% |

Preferably, the non-volatile cysteine-derived sulphur compound content is 5.1% of the total mass of the supplement of the invention and according to the following biochemical profile:

| Non-volatile cysteine-derived sulphur compounds | mg/kg of supplement |
|---|---|
| γ-Glutamyl-S-allylcysteine | 25777 |
| N-γ-glutamyl-S-(1-propenyl)cysteine | 16414 |
| γ-glutamyl-S-allylthiocysteine | 7736 |
| N-acetyl-S-(N-methylcarbamoyl)cysteine | 362 |
| γ-L-glutamyl-S-(2-carboxy-1-propyl)cysteinylglycine | 291 |
| Alliin | 193.2 |
| S-methylcysteine | 187 |
| Propane-1-sulfonothioic acid | 144 |
| N-acetylmethionine sulfoxide | 111 |
| Total (mg/kg) | 51,215.2 |
| % (total mass) | 5.1 |

The supplement of the invention also contains volatile sulphur compounds which characterise its aromatic profile with a relative composition defined with respect to the total volatile compounds (100%):

| Compound | % |
|---|---|
| Allyl trisulfide | 39.65 |
| 2-vinyl-4H-1,3-dithiine | 14.9 |
| 3-vinyl-1,2-dithiacyclohex-4-ene | 7.99 |
| Allylmethyl trisulfide | 7.24 |
| Diallyl disulfide | 6.74 |
| 1-allyl-2-(prop-1-en-1-yl)disulfane | 4.48 |
| Diallyl tetrasulfide | 4.00 |
| 1-allyl-3-(prop-1-en-1-yl)trisulfane | 3.13 |
| 1-allyl-3-propyltrisulfane | 2.90 |
| 1-allyl-2-isopropyldisulfane | 2.81 |
| Propyl disulfide | 1.38 |
| 5-methyl-1,2,3,4-tetrathiane | 1.26 |
| 3H-1,2-dithiol | 1.03 |
| Propyl trisulfide | 0.86 |
| Allylmethyl disulfide | 0.64 |
| 1,2-dithiolane | 0.55 |
| 4-methyl-1,2,3-trithiolane | 0.44 |
| Total | 100 |

As derived from the preceding tables, the concentration of cysteine-derived sulphur compounds is high, and the composition of volatile sulphur compounds present in the supplement of the invention similar to that of garlic essential oil obtained by steam stripping, although with significant differences such as the absence of alliinase activity, the predominance of allyl trisulfide in the aromatic profile and a higher proportion of vinyldithiins.

Another object of the invention relates to a method for obtaining the supplement described above, said supplement being obtained from peeled garlic bulbs that are first subjected to a cold expression process to obtain the liquid fraction in the form of garlic juice,
i. which is filtered to remove solid residues,
ii. the filtered garlic juice obtained in i) is mixed at 50% with a solution of additives, i.e., citric acid (1 to 5%), cysteine (1% to 2%) and/or glutamic acid (1% to 2%) in a diluted acetic solution, preferably apple cider vinegar (qsf), with a final pH below 4,
iii. the mixture obtained in ii) is homogenised until complete cytolysis at differential pressures of 100 to 600 bar.
Optionally, flavourings can be added to the mixture in step ii).

The method of the invention allows the complete release of intracellular (cysteine-derived) sulphur components from garlic and prevents them from reacting naturally through interruption of the alliin-alliinase enzyme system, such that the alliin-allicin conversion reaction does not occur in the product or in the food supplied (water or feed).

In a preferred embodiment of the method of the invention, the supplement of the invention has the following composition: 50% by weight of garlic juice, 50% by weight of acetic solution of cysteine, glutamic acid, citric acid and optionally flavourings.

Also in a preferred embodiment, the acetic solution of cysteine, glutamic acid, citric acid and optionally flavourings is obtained using apple cider vinegar as a solvent.

Another object of the invention relates to the use of the supplement described above in animal feed, for example, mixed with the drinking water at concentrations of 0.2 to 2%.

Moreover, the inventors have found that the administration of the food supplement of the invention to chickens in drinking water causes a significant pH drop, which does not affects their water consumption at first, but significantly stimulates same after 3 days of application, also having effect on breast meat quality, bioavailability and clotting parameters, as well as an additive or complementary effect with respect to that of flavonoids provided in feed.

It has also been found that the administration of the food supplement of the invention to chickens in drinking water at high concentrations (2%) during the last three days of life of the chickens does not alter their aroma or flavour (does not modify the sulphur component profile of their muscles or fats), but increases (with a dose-dependent relationship) the concentrations of S-allyl-cysteine in their sera, plasmas, livers and kidneys, along with increasing levels of alliin in serum and of allicin in the respective plasmas. This finding (detection of allicin in plasma) allows demonstrating the existence of an enzymatic activity similar to that of alliinase in this blood fluid; possibly based on the action of the prothrombinase complex.

Haemostatic activity analyses of the sera of chickens to which the supplement of the invention is administered do not indicate a significant association with the modified results of parameters associated with factors of the clotting cascade. In this sense, the significant effort made to find a suitable method (activated partial prothrombin time) which was specifically adapted to homologous avian tissue (lyophilised chicken brain) to reduce the high individual variability (proven in methods described with commercial reagents of other species), did not translate into significant results. However, trends in other measured parameters (bleeding time) which may be subject to methodological discussion (lack of standard), suggest a possible fibrinolytic effect or thrombocyte antiaggregation effect. Other additional evaluations, performed to corroborate other possible effects that have been described for the components detected in blood have only highlighted a significant effect in serum: reduced total oxidation state (TOS), the mechanism of action of which is different from that of other antioxidant compounds (flavonoids).

In terms of meat quality, the administration of the food supplement of the invention to chickens in drinking water at high concentrations (2%) during the last three days of life of the chickens translates into a very significant reduction in the percentage of breast meat affected by vascular lesions (petechiae, bleeding, or suffusions) and, therefore, its final commercial value increases. Furthermore, it does not affect the visual properties of these muscles and can optimise the results achieved with other antioxidants (flavonoids) in terms of optics which are preserved for a long time in trays as a result of reduced meat oxidation.

### Examples

The following examples illustrate the present invention.

### 1. Nutritional value of the food supplement of the invention

From the nutritional viewpoint, the supplement of the invention has the following components shown in Table 1 and the nutritional values indicated in Table 2:

**Table 1**

| | |
|---|---|
| Gross protein | 3.50% |
| Gross fibre | 1.40% |
| Gross oils and fats | 0.01% |
| Gross ash | 4.20% |
| Lysine | 0.09% |
| Methionine | 0.03% |
| Sodium | 0.14% |
| Calcium | 0.01% |
| Phosphorus | 0.08% |
| Magnesium | 0.02% |
| Potassium | 0.05% |
| Moisture | 78.4% |
| Selenium | 0.26 mg/kg |
| Percentages expressed in % by weight with respect to the supplement | |

**Table 2**

| PARAMETER | Per 100 g of supplement |
|---|---|
| Aspartic acid | 0.29% |
| Glutamic acid | 0.51% |
| Alanine | 0.12% |
| Arginine | 0.60% |
| Phenylalanine | 0.08% |
| Glycine | 0.06% |
| Histidine | 0.07% |
| Isoleucine | 0.07% |
| Leucine | 0.11% |
| Lysine | 0.09% |
| Methionine | 0.03% |
| Serine | 0.10% |
| Thyrosine | 0.10% |
| Threonine | 0.07% |
| Tryptophan | 0.02% |
| Valine | 0.13% |
| Pyruvic acid | 0.11% |
| Monounsaturated FAs: | 0.02% |
| Polyunsaturated FAs: | 0.06% |
| Saturated FAs: | 0.02% |
| Trans FAs: | 0.009% |
| Sugars | 1.75% |
| Carbohydrates | 13.80% |
| Ashes | 4.20% |
| Energy | 72.9 kcal (309 Kjul) |
| Sulphur | 73 mg |
| Manganese | 1.7 mg |
| Potassium | 49.1 mg |
| Zinc | 1.2 mg |
| Ascorbic acid (Vit. C) | 6.2 mg |
| Cyanocobalamin (Vit. B12) | 0.009 mg |
| Cholecalciferol (Vit. D3) | 0.3 mg |
| Niacin (Vit. B3) | 1.5 mg |
| Pantothenic acid (Vit. B5) | 0.2 mg |
| Pyridoxine (Vit. B6) | 0.07 mg |
| Retinol, equiv. (Vit. a) | 12.01 mg |
| Riboflavin (Vit. B2) | 0.06 mg |
| Thiamine (Vit. B1) | 0.23 mg |
| Tocopherol (Vit. E) | 0.5 mg |

When the supplement of the invention is supplied with the animal's drinking water at concentrations of 0.2 to 2%, the food supplement of the invention stands out for including a relevant diversity of amino acids, particularly cysteine, in variable composition ranges (from 3 to 10%), accompanied by 2.78% arginine which, at dose of usage, represents 0.08% of the needs of this component in the feed of chickens in the growth phase, for example. Furthermore, it has interesting percentages of glutamic acid (2.36%) and aspartic acid (1.34%). Moreover, the contributions of iron (13 mg), which represent an input of 3% of the needs of growing chickens and 1.5% of laying hens and chickens for fattening; of selenium (26 µg), which represent 2.4% of the needs of growing chickens, laying hens and chickens for fattening, are relevant. Sodium inputs (136 mg) represent 0.84% of the needs of growing chickens and chickens for fattening. Lastly, the most relevant vitamin inputs should also be considered: Thiamine '-Vit. B1- (0.23 mg), which represent 1.6% of the needs of this microelement for growing chickens, 1.18% for chickens in the fattening phase and 2.62% for hens in the laying period. The inputs of niacin -vit. B2- (1.5 mg) are also relevant, providing 1.26% of the needs of growing chickens and 0.5% of chickens in the fattening phase. Lastly, the inputs of tocopherol -vit. E- (0.5 mg) represent 0.84% of the needs of growing chickens, chickens for fattening, and hens in the laying period.

When the supplement of the invention is administered to ruminants with drinking water at 1%, the contributions of cobalt (13 µg) are relevant, representing an input of 12.03% of the needs of lambs in the fattening phase and 100% of the needs of sheep in maintenance. The contributions of sodium (136 mg), which may cover (at maximum recommended doses) up to 7% of the needs of lambs in the growing and fattening phase, are also relevant. This element can cover 1.79% of the needs of sheep in maintenance, and selenium (26 µg) represents 2.4% of the needs of lambs that are growing - being fattened, and 0.41% of sheep in maintenance. Lastly, the inputs of iron (13 mg) may reach 2.4% of the needs of lambs that are growing - being fattened, and 0.3% of sheep in the maintenance phase.

### 2. Biochemical study of the nutritional supplement of the invention (present in drinking water)

In this study, biochemical analyses are performed to verify the stability of sulphur metabolites of the supplement of the invention applied in drinking water intended for all types of animals.

For the development of these studies, specific techniques were defined to define and compare the chemical profile of (volatile and non-volatile) cysteine-derived sulphur compounds in water supplemented with the supplement of the invention added at 0.5%, 1%, and 2%.

Based on this methodology it was possible to rule out the biosynthesis of allicin before the administration of the supplement of the invention to the animals, corroborating the hypothesis raised in relation to the inactivation of the alliin-alliinase system of this compound.

### Results

As a result of the indicated analyses, the following component profile was obtained for the supplement of the invention diluted in water (0.5 - 2%):
Mean concentration (mg/l) of Alliaceae-derived compounds identified in the drinking water containing the supplement.

| Compound | 0.5% | 1% | 2% |
|---|---|---|---|
| Alliin | 47.8 (2.1) | 53.3 (35.5) | 134.7 (3.6) |
| Glutamyl-S-allylcysteine | 780.5 (7) | 725 (41.5) | 2,636.7 (3.9) |
| L-γ-Glutamyl-S-allylthio-L-cysteine | 249.9 (11) | 301.4 (41.2) | 973.3 (4.8) |
| N-acetylmethionine sulfoxide | 1.9 (10.5) | 2.1 (42.9) | 7.6 (7.9) |
| S-(allylthio)-L-cysteine | 5.3 (13.2) | 6.2 (40.3) | 16.6 (6.6) |
| S-allylcysteine | 23.1 (18.2) | 19.3 (34.7) | 68 (4.3) |
| S-methyl-L-cysteine | 4.8 (12.5) | 5.0 (36) | 17 (6.5) |
| S-propyl-L-cysteine | 2.5 (60) | 4.9 (30.6) | 14 (3.6) |
| γ-glutamyl-S-(1-propenyl)cysteine, sulfoxide | 31.9 (6.6) | 149.2 (107.8) | 81.7 (9.7) |
| γ-glutamyl-S-methylcysteine | 93.2 (9.4) | 69.9 (63.8) | 381.8 (5.8) |
| γ-L-glutamyl-S-(2-carboxy-1-propyl)cysteinylglycine | 6.7 (9) | 6.6 (37.9) | 26.1 (9.6) |
| Total (mg/l) | 1247.5 (7.3) | 1343 (39.4) | 4357.7 (4.3) |
| The relative standard deviation (%) is in parentheses | | | |

### 3. Effect on the pH of drinking water, productive yields and water consumption

This study collects the pHs of the drinking water consumed by chickens for fattening in experimental facilities in which three tests aimed at evaluating the effect of the supplement of the invention during the days prior to the slaughter of the poultries have been performed.
- Test 1: The supplement of the invention was dosed at 0.75% and 1.5 into drinking water, with a pH of 6.77, and administered through bell drinkers for 7 days.

### Results

The following table shows the mean pH measured. Treatments with the addition of the supplement of the invention presented lower mean pH values than the negative control (P<0.001).

| | water pH |
|---|---|
| Negative control (water only) | 6.77 |
| Negative control with 0.75% supplement | 4.94 |
| Negative control with 1.50% supplement | 4.45 |
| Standard error of the mean (n=5) | 0.035 |
| p-value | <0.001 |

- Test 2: Acetylsalicylic acid (0.5 g/l of FEBRICEN; 650 mg of acetylsalicylic acid/g) or the supplement of the invention was dosed at 0.5%, 1% and 2% into drinking water, with a pH of 6.62, and administered through cage drinkers for 3 days.

### Results

The following table shows the mean pH measured. The addition of the supplement decreased the pH of the water compared to treatments that did not include same (P≤0.001).

| | water pH |
|---|---|
| Negative control (water only) | 6.62 |
| Positive control with acetylsalicylic acid | 6.86 |
| Negative control with 0.50% supplement | 5.95 |
| Negative control with 1.00% supplement | 4.80 |
| Negative control with 2.00% supplement | 4.36 |
| Standard error of the mean (n=3) | 0.107 |
| p-value | <0.001 |

A linear relationship was observed between the dose of the supplement and the pH of the water, with the pH of the water being reduced by 1.2 pH points for every 1% of product added to the water.
- Test 3: The supplement of the invention was dosed at 2% into drinking water, with a pH of 6.74, and administered through bell drinkers for 3 days.

### Results

The following table shows the mean pH of the drinking water, measured for each of the treatments tested in test 3.

| | water pH |
|---|---|
| Negative control (water only) | 6.74 |
| Negative control with 2.0% supplement | 4.29 |
| Standard error of the mean (n=3) | 0.110 |
| p-value | <0.0001 |

The addition of the supplement of the invention decreased the pH of the water compared to treatments that did not include same (P<0.0001); with the average pH of the drinking water of the negative control being 6.74±0.07 compared to 4.29±0.11 in the drinking water with 2% supplement.

### 4. Effect on voluntary consumption (drinking water with the supplement of the invention)

This study compiles the results of three tests aimed at evaluating the effect of the supplement of the invention during the days prior to the slaughter of poultries in experimental facilities, as already mentioned in the previous section.
- Test 1: It was performed to evaluate four experimental treatments (control, supplement of the invention at 0.75%, supplement of the invention at 1%, alternative formula at 0.75 %) in 3 pens of 5 female Ross 5 animals (60 chicks with a mean weight of 2.9 kg), each for 7 days

### Results

The mean daily water consumption per animal did not differ significantly (P>0.05) between treatments during the 7 days of administration of the products diluted in drinking water (at two doses) in this test. No rejection of any of the treatments by the chickens was observed.

With respect to daily water consumption, the administration of the supplement of the invention in drinking water did not cause any type of rejection in water consumption by the animals. Water consumptions were similar compared to the negative control during the first five days. Starting from day 6, the negative control showed lower water consumptions with respect to treatment with 1.50% (P=0.028 on day 6; P=0.029 on day 7) and also with respect to treatment with 0.75% on day 7 (P<0.001).
- Test 2: It was performed to evaluate five experimental treatments (control, acetylsalicylic acid, supplement of the invention at 0.5%, supplement of the invention at 1% and supplement of the invention at 2%) in cages with 2 male Ross 308 animals (80 chickens with a mean weight of 2.8 kg), each for 3 days.

### Results

No significant differences were observed between treatments in the average water consumption during the administration phase of the supplement of the invention.
- Test 3: It was performed to evaluate two experimental treatments in drinking water (control and supplement of the invention at 2%) on groups of poultries with four treatments with different flavonoid inputs in feed, distributed in 8 pens of 12 males Ross 308 animals (384 chickens with a mean weight of 2.12 kg), each for 3 days.

### Results

Regarding water consumption, the administration of the supplement of the invention significantly decreased (P=0.007) water consumption on the first day of application thereof, although it increased subsequently, reaching the same water consumption as the negative control group on the third day. These results indicate that the animals progressively adapt to the water with the supplement in a short time period (<3 days).

### 5. Effect on productive performance of chickens for fattening

This study groups the conclusions of the results from the analysis of the productive indices estimated in tests 2 and 3, which have already been presented in the preceding sections, aimed at evaluating the effect of the supplement of the invention during the days prior to the slaughter of poultries in experimental facilities.
- Test 2: It was performed to evaluate five experimental treatments (control, acetylsalicylic acid, supplement of the invention at 0.5%, supplement of the invention at 1% and supplement of the invention at 2%) in cages with 2 male Ross 308 animals (80 chickens with a mean weight of 2.8 kg), each for 3 days.

### Results

With respect to the negative control group, the addition of the supplement of the invention to drinking water did not modify the productive parameters (water and feed consumption, mean daily gain, weight, and conversion rate).
- Test 3: It was performed to evaluate two experimental treatments in drinking water (control and supplement of the invention at 2%) on groups of poultries with four treatments with different flavonoid inputs in feed, distributed in 8 pens of 12 males Ross 308 animals (384 chickens with a mean weight of 2.12 kg), each for 3 days.

### Results

With respect to the negative control group, the addition of the supplement of the invention to drinking water altered the productive parameters at the start of application, which had a slight impact (-6%) on the estimated mean daily gain for the three days of application, which had a slight impact (-1%) on the overall estimated value for this index.

### 6. Study of the metabolism of the food supplement of the invention in chickens for fattening

This study summarises the biochemical analyses for verifying the composition, stability and bioavailability of the sulphur metabolites of the supplement of the invention in the body of the animals used in test 2. Methods for the identification of exogenous metabolites related to the bioactive ingredients supplied have been developed based on biological samples from these chickens, for the purpose of characterising the composition of the samples.

To that end, liquid and gas chromatographic techniques coupled to high resolution mass spectrometry (LC-MS/MS and GC-MS) have been used, whereby (volatile and non-volatile) sulphur compounds have been identified and the chemical profile derived from cysteine has been characterised in different tissues, which allowed confirming the bioavailability of S-allylcysteine, alliin and allicin in samples obtained from chicken blood, as well as other metabolites in different biological matrices (liver, kidney, fat, muscle and faeces).

### Results

The plasma profile of chickens fed with the supplement of the invention was obtained, obtaining the following results:

| **Compound** | - control | + control | 0.5% | 1% | 2% |
|---|---|---|---|---|---|
| Allicin | | | 0.6 (17) | 1.6 (18.1) | 2.8 (13.8) |
| Alliin | 3.7 (4.4) | 3.8 (6.7) | 3.4 (4.4) | 3.7 (4.4) | 3.4 (3.4) |
| S-Allylcysteine | | | 2.4 (50.4) | 4 (9.6) | 8.6 (18) |
| S-Methyl-L-cysteine | 44.8 (8.4) | 40.8 (11) | 38.1 (10.6) | 40.4 (8.4) | 40.1 (7.7) |
| Total (mg/l) | 48.4 (7.6) | 44.6 (10.3) | 44.5 (9.4) | 49.6 (6.8) | 54.9 (7.7) |

The serum profile of chickens fed with the supplement of the invention was also obtained obtaining the following results:

| **Compound** | - control | + control | 0.5% | 1% | 2% |
|---|---|---|---|---|---|
| Allicin | 3.4 (11.1) | 3.4 (11.9) | 1.5 (122.3) | 2.1 (69.6) | 2.4 (62.7) |
| Alliin | | | 0.7 (45.4) | 1.7 (72.8) | 3.1 (39) |
| S-Allylcysteine | | | 2.8 (100.9) | 5.1 (57) | 9.9 (43.9) |
| S-Methyl-L-cysteine | 44.6 (27.7) | 41.5 (28.8) | 17.7 (116.4) | 27.7 (77.1) | 28.9 (66.8) |
| Total (mg/l) | 48 (26.1 ) | 44.9 (26.9) | 22.8 (102.5) | 36.7 (56.4) | 44.3 (47.9) |
| The relative standard deviation (%) is in parentheses | | | | | |

The mean concentration (mg/kg) of Alliaceae-derived compounds identified in the liver, kidney, muscle fat and faeces of chickens was also obtained with the following result:

| Liver | | | | | |
|---|---|---|---|---|---|
| Compound | - control | + control | 0.5% | 1% | 2% |
| N-acetylmethionine sulfoxide | 32.1 (7.9) | 38.3 (6.8) | 31.5(11) | 30.2 (2.5) | 35.4 (8.7) |
| S-propyl-L-cysteine | 281.3 (3.1) | 287.3 (4.2) | 270.7 (3.9) | 266.1 (2.7) | 287.6 (3.3) |
| S-allylcysteine | 35475.9 (2.5) | 37503.2 (1.6) | 35220.8 (2.7) | 34573.9 (1.7) | 37474. 2 (2.2) |
| Total (mg/kg) | 35787.5 (2.5) | 37,828.8 (1.7) | 35523 (2.7) | 34870.2 (1.7) | 37,797. 2 (2.2) |

| Kidney | | | | | |
|---|---|---|---|---|---|
| S-allylcysteine | 48357.7 (2.2) | 50213.8 (0.5) | 49858.4 (1.8) | 46736.1 (1.8) | 57377. 5 (1.9) |
| S-propyl-L-cysteine | 2,801.6 (2.8) | 3,600.6 (1.2) | 2,639.8 (1.0) | 2,183.9 (3.8) | 3,128.2 (5.7) |
| S-methyl-L-cysteine | 12.3 (13.2) | 10.9 (8.4) | 15 (12.1) | 19.5 (5.8) | 22.7 (6.5) |
| N-acetylmethionine sulfoxide | 10.5 (21.2) | 8.7 (28.7) | 9.1 (22.4) | 7.2 (42.7) | 13.4 (17.2) |
| Total (mg/kg) | 51182.1 (2.2) | 53834.1 (0.4) | 52522.3 (1.7) | 48946.6 (1.8) | 60541. 8 (1.8) |

| Muscle | | | | | |
|---|---|---|---|---|---|
| Methionine sulfoxide | 37 (34.4) | 37 (34.4) | 36.3 (44.7) | 34.9 (12.6) | 35.7 (24.5) |
| S-propyl-L-cysteine | 153.8 (21.4) | 154.7 (17.1) | 171.8 (14.2) | 215.9 (14) | 162.4 (17.7) |
| S-allylcysteine | 6832.8 (3.9) | 7241 (20.8) | 6565.8 (14.8) | 7002.2 (6.9) | 6401.3 (17.7) |
| Total (mg/kg) | 7023.6 (3.9) | 7430.5 (20.4) | 6773.8 (14.5) | 7252.9 (6.6) | 6599.3 (17.3) |

| Fat | | | | | |
|---|---|---|---|---|---|
| Methionine sulfoxide | 19.2 (35.7) | 6.7 (100.2) | 7.9 (39.1) | 20.9 (80.6) | 15.1 (77.9) |
| S-propyl-L-cysteine | 37.9 (59.4) | 21.3 (123.3) | 23 (47) | 39 (65.7) | 31.2 (91.2) |
| Total (mg/kg) | 57.1 (46.2) | 28.1 (117.1) | 31 (44) | 59.9 (69.4) | 46.3 (85.8) |

| Faeces | | | | | |
|---|---|---|---|---|---|
| Alliin | 0 (108.2) | 0 (200) | 0.2 (120.2) | 0.13 (43.6) | 0.11 (184.3) |
| S-propyl-L-cysteine | 0.15 (65.2) | 0.05 (24) | 0.25 (93.3) | 0.09 (57.3) | 0.36 (135.4) |
| S-allylcysteine | 9.05 (27.7) | 7.98 (76.9) | 8.34 (60.8) | 7.06 (43.5) | 7.3 (56.7) |
| Total (mg/kg) | 9.2 (26.8) | 5.66 (76.2) | 10.42 (44.9) | 8.16 (34.9) | 7.33 (67.7) |
| The relative standard deviation (%) is in parentheses | | | | | |

As follows from the results shown, higher doses of the supplement of the invention allow achieving higher concentrations of cysteine-derived compounds in animal tissues. In the kidney, liver and, to a lesser extent, also in the muscle, S-allylcysteine is the metabolite that best reflects product consumption. On the contrary, the fat and faecal samples do not provide data that could be considered indicative of the consumption of the supplement of the invention. The alliin and allicin compounds identified in serum and plasma samples are key for evaluating its bioavailability and possible alliinase-type effects at the blood level.

### 7. Effect on biochemical parameters and blood clotting properties of chickens for fattening

In this study, biochemical analyses are created to verify the effects derived from the bioavailability of the sulphur metabolites of the supplement of the invention on the blood biochemistry and clotting parameters of the animals used in tests 1 and 2 set forth above. Methods for the evaluation of the haemostatic function and oxidative stress of chickens for fattening at slaughter have been developed based on biological samples from these chickens:
Test 1: Analyses were performed to evaluate activated clotting time, prothrombin time (with commercial reagents and species-homologous tissue) and activated partial thromboplastin time in female Ross 5 poultries subjected to four experimental treatments (control, supplement of the invention at 0.75%, supplement of the invention at 1%, alternative formula at 0.75%) after 3 and 7 days of application

### Results

The activated clotting time (s) was obtained for each treatment after 3 and 7 days of administration of complementary feed in drinking water, plasma profile of chickens fed with the supplement of the invention, obtaining the following results:

| | Treatment¹ | | | | | | | Day² | | | |
|---|---|---|---|---|---|---|---|---|---|---|---|
| | T1 | T2 | T3 | T4 | SEM³ | p-value | | 3 | 7 | SEM³ | p-value |
| Clottin g time | 27.1 | 23.1 | 26.5 | 23.4 | 3.60 | 0.809 | | 23.4 | 26.6 | 2.94 | 0.382 |
| ¹Number of replicates: 9 replicates/treatment | | | | | | | | | | | |
| ²Number of replicates: 3 and 6 replicates/day for days 3 and 7, respectively | | | | | | | | | | | |
| ³SEM: standard error of the mean | | | | | | | | | | | |
| T1: Negative control (CN); T2: CN + supplement of the invention at 0.75%; T3: CN + supplement of the invention at 1.5%; T4: CN + alternative formula at 0.75% | | | | | | | | | | | |

The prothrombin time (s) was obtained by means of the chicken brain method for each treatment after 3 and 7 days of administration of the supplement of the invention in drinking water, obtaining the following results:

| | Treatment¹ | | | | | | Day² | | | |
|---|---|---|---|---|---|---|---|---|---|---|
| | T1 | T2 | T3 | T4 | SEM³ | p-value | 3 | 7 | SEM³ | p-value |
| Prothrombin time | 7.6 | 7.6 | 10.0 | 7.9 | 1.73 | 0.714 | 7.5 | 9.0 | 1.52 | 0.381 |

| | | | | | | | | | | |
|---|---|---|---|---|---|---|---|---|---|---|
| ¹Number of replicates: 15 replicates/treatment ²Number of replicates: 3 and 12 replicates/day for days 3 and 7, respectively ³SEM: standard error of the mean T1: Negative control (CN); T2: CN + supplement of the invention at 0.75%; T3: CN + supplement of the invention at 1.5%; T4: CN + alternative formula at 0.75% | | | | | | | | | | |

The prothrombin time (s) was obtained by means of a commercial method for each treatment after 3 and 7 days of administration of complementary feed in drinking water, obtaining the following results:

| | Treatment¹ | | | | | | Day² | | | |
|---|---|---|---|---|---|---|---|---|---|---|
| | T1 | T2 | T3 | T4 | SEM³ | p-value | 3 | 7 | SEM³ | p-value |
| Prothrombin time | 67.4 | 73.2 | 51.6 | 57.5 | 14.59 | 0.658 | 54.0 | 70.9 | 11.70 | 0.198 |

| | | | | | | | | | | |
|---|---|---|---|---|---|---|---|---|---|---|
| ¹Number of replicates: 15 replicates/treatment ²Number of replicates: 3 and 12 replicates/day for days 3 and 7, respectively ³SEM: standard error of the mean T1: Negative control (CN); T2: CN + supplement of the invention at 0.75%; T3: CN + supplement of the invention at 1.5%; T4: CN + alternative formula at 0.75% | | | | | | | | | | |

The activated partial thromboplastin time (s) was obtained for each treatment after 3 and 7 days of administration of complementary feed in drinking water, obtaining the following results:

| | Treatment¹ | | | | | | Day² | | | |
|---|---|---|---|---|---|---|---|---|---|---|
| | T1 | T2 | T3 | T4 | SEM³ | p-value | 3 | 7 | SEM³ | p-value |
| Thromboplastin time | 61.9 | 68.5 | 69.5 | 46.9 | 11.37 | 0.478 | 51.1 | 72.3 | 10.08 | 0.067 |

| | | | | | | | | | | |
|---|---|---|---|---|---|---|---|---|---|---|
| ¹Number of replicates: 15 replicates/treatment ²Number of replicates: 3 and 12 replicates/day for days 3 and 7, respectively ³SEM: standard error of the mean T1: Negative control (CN); T2: CN + supplement of the invention at 0.75%; T3: CN + supplement of the invention at 1.5%; T4: CN + alternative formula at 0.75% | | | | | | | | | | |

Test 2: Analyses were performed to evaluate bleeding time, prothrombin time (with species-homologous tissue) and total oxidation state in male Ross 308 poultries subjected to five experimental treatments (control, acetylsalicylic acid, supplement of the invention at 0.5%, supplement of the invention at 1% and supplement of the invention at 2%) after 3 days of application

### Results

Total oxidation state (TOS) was measured, and differences between groups were found to be significant at a level of P<0.001. Regarding pairwise comparisons, differences were seen between T5 (supplement of the invention at 2.0%) with respect to groups T1 (negative control), T2 (positive control) and T3 (supplement of the invention at 0.5%), all with a significance level P=0.001.

In the same manner, nitrate (or nitric oxide) was measured and differences between groups were found to be significant at a level of P<0.001. Regarding pairwise comparisons, difference was seen between T3 (supplement of the invention, 0.5%) with T1 (negative control) and T5 (supplement of the invention, 2.0 %) with a significance level of P<0.001 in both cases, and with T2 (positive control) with a significance level of P=0.001.

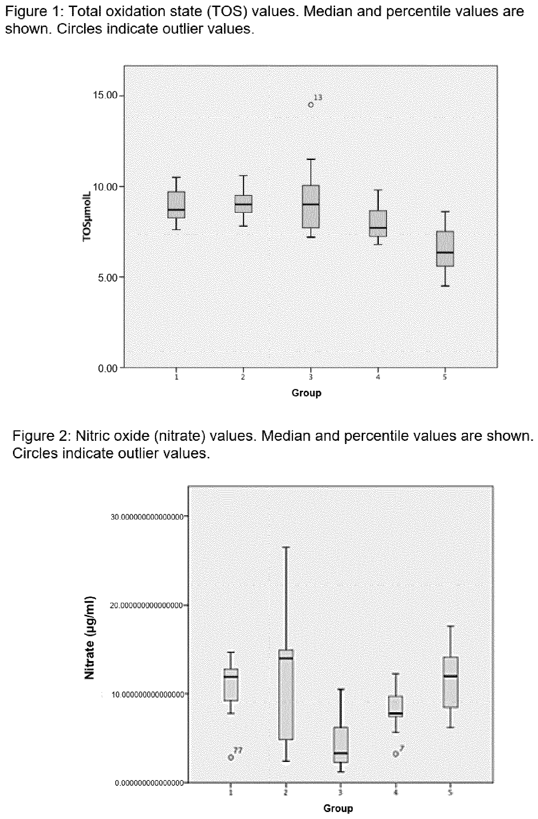

The results are shown in Figures 1 and 2, respectively.

The results obtained with antioxidant molecules (CUPRAC, FRAP, TEAC, thiol, uric acid) and oxidants (AOPP and FOX) did not highlight significant differences in the comparative analyses, nor did the analyses of the measured clotting parameters (prothrombin time (PT), fibrinogen, D-dimer and bleeding time). Nevertheless, a decreasing trend of prothrombin time is observed with increasing doses of the supplement of the invention and, interestingly, bleeding time tends to increase in the group receiving the lowest dose of the supplement of the invention (0.5%).

Moreover, no differences were found between groups in the results of the analyses of interleukins IL-6 and IL-8, although they were close to statistical significance, an increasing IL-6 trend is observed in T2 (positive control) and T3 (supplement of the invention at 0.5%).

No statistically significant differences are observed between the different groups with respect to serum values of albumin, alkaline phosphatase, aspartate aminotransferase, bilirubin or total proteins, nor those of urea or uric acid.

### 8. Effect on breast meat quality after chicken slaughter and during breast meat refrigerated shelf life

This study summarises the bromatological analyses performed to verify the effects derived from the supplement of the invention on the breast meat quality of the chickens used in the tests set forth above. Methods for the evaluation of the frequency of vascular lesions and for the measurements of parameters indicative of muscle tissue alteration have been developed based on the biological samples from these animals:
Test 1: Breast meat examinations were performed to evaluate the frequency of vascular lesions and their colour in female Ross 5 poultries subjected to four experimental treatments (control, supplement of the invention at 0.75%, supplement of the invention at 1%, alternative formula at 0.75%) after 7 days of application.

### Results

The following table shows the number of breast meat affected by vascular lesions and the relative frequency of this value.

| | Cases | Frequency |
|---|---|---|
| Negative control (water only) | 3 | 0.25 |
| Negative control with 0.75% supplement | 0 | 0 |
| Negative control with 1.50% supplement | 4.45 | 0.42 |
| 0.75% alternative formula | 0 | 0 |

The mean values obtained from the colour parameters L*, a* and b* of the breast meat of chickens slaughtered on day 7 of the study are shown in the following table. Colour parameters L*, a* and b* of breast meat, after removing the skin 30 minutes after slaughter

| Treatment | L* | a* | b* |
|---|---|---|---|
| T1 | 45.70 | 2.92 | 2.01 |
| T2 | 45.85 | 2.74 | 2.33 |
| T3 | 46.87 | 3.05 | 2.29 |
| T4 | 46.26 | 2.91 | 2.02 |
| SEM¹ | 0.609 | 0.303 | 0.387 |
| p-value | 0.542 | 0.909 | 0.900 |

| | | | |
|---|---|---|---|
| ¹SEM: Standard error of the mean (n=6) T1: Negative control (CN); T2: CN + supplement of the invention at 0.75%; T3: CN + supplement of the invention at 1.5%; T4: CN + alternative formula at 0.75% | | | |

Test 2: Examinations were performed on 80 pieces of breast meat to evaluate the frequency of vascular lesions and their colour in male Ross 308 poultries subjected to five experimental treatments (control, acetylsalicylic acid, supplement of the invention at 0.5%, supplement of the invention at 1% and supplement of the invention at 2%) after 3 days of application

### Results

The frequency of vascular defects (percentage of breast meat with lesions in the form of petechiae or haematoma) in the treatments was evaluated *in a sensory manner, such that the presence of defects* was assigned on a binomial basis (yes/no) and the number of affected samples was expressed in absolute and relative percentage values (with respect to the negative control) in the following table:
Frequency of surface vascular defects in the breast meat of chickens subjected to different treatments and percentage of lesion reduction with respect to the negative control treatment (without addition of compounds)

| Treatment | Presence of defects (%) | Lesion reduction (%) |
|---|---|---|
| Negative control (water only) | 68.75 | - |
| Positive control with acetylsalicylic acid | 43.75 | 25 |
| Negative control with 0.50% supplement | 37.50 | 31.25 |
| Negative control with 1.00% supplement | 37.50 | 31.25 |
| Negative control with 2.00% supplement | 25.00 | 43.75 |

From the data presented, it can be seen that the capacity to reduce the frequency of breast meat with vascular lesions of the supplement of the invention at different concentrations (0.5, 1 and 2%) was greater to that of acetylsalicylic acid (at dose of usage).

The analysis of the instrumental colour measurements carried out on the breast meat freshly extracted from animals subjected to the different evaluated treatments revealed that no significant differences were found between samples within the same treatment (intraspecific variability), or between samples subjected to different treatments (interspecific variability). The analysed breast meat had an intermediate tone (neither light nor dark) and tended towards a typical reddish and slightly yellowish colour. Moreover, regarding the total colour difference (AE*) of the samples obtained from chickens subjected to treatments with the supplement of the invention immediately after slaughter with respect to the control samples, these were not detectable (AE*= 0-0.5). However, the total colour difference was slightly perceptible (AE*= 0.5-1.5) in samples subjected to treatment with the supplement of the invention at 2% with respect to the control, indicating that this colour change could be slightly detected by the human eye.

Test 3: Examinations were performed on the breast meat from 192 chickens to evaluate the frequency of vascular lesions and their colour in male Ross 308 poultries subjected to two experimental treatments in drinking water (control and supplement of the invention at 2%) on groups of poultries with four treatments with different flavonoid inputs in feed, distributed in 8 pens of 12 animals, for 3 days.

### Results

A panel of tasters performed a sensory evaluation of the breast meat samples from the different treatments for the purpose of detecting the presence of surface defects and lesions. The percentage of the incidence of lesions, as well as the reduction of the presence of defects with respect to treatment 1 (compound-free negative control) is shown in the following table.

### Presence of defects of treatments 2 to 4 and percentage of lesion reduction with respect to treatment 1 (negative control with no added compounds)

| Treatment | Presence of defects (%) | Lesion reduction (%) |
|---|---|---|
| Negative control (with no products added to the water) | 68.70 | - |
| Negative control (Basal diet) + supplement of the invention at 2% | 38.30 | 30.40 |
| Basal diet + Evencit Q (300 g/T) + supplement of the invention at 2% | 36.17 | 32.53 |
| Basal diet + Evencit Q (500 g/T) + supplement of the invention at 2% | 22.91 | 45.79 |
| Positive Control (Basal Diet + Quercetin 1000 ppm) + supplement of the invention at 2% | 27.10 | 41.60 |

The results obtained in the instrumental colour measurements in this phase showed that there were no significant differences within the same treatment (interspecific variability) or between treatments (intraspecific variability) of the analysed breast meat samples. The mean values of the colour attributes again indicated that the analysed breast meat had an intermediate tone and, a (typical) reddish and slightly yellowish colour.

With respect to the total colour difference (AE*), it was calculated between samples of treatments 2 to 4 in comparison with treatment 1 (only with supplement of the invention at 2%). No detectable differences (AE*= 0-0.5) were observed in the samples evaluated immediately after slaughter with respect to the control samples, preserving the typical colour of chicken breast meat. Similarly, the colour and total colour difference of samples of treatments 1 and 3 were also evaluated during their refrigerated shelf life (expected shelf life of 8 days) packaged in a modified atmosphere. During this period, the instrumental colour measurement was performed at an intermediate point (4 days) and, at the end of the storage period (8 days) and, differences with respect to day 0 were calculated. In the case of treatment 1, the differences were intense (AE*= 6.0-12.0) from the intermediate point of analysis (11.14) to the end of shelf life (11.59). Furthermore, it was observed that the containers have collapsed to a certain extent and surface slime has appeared, which intensified at the end of the study period. However, these colour differences, although visually visible (AE*= 3.0-6.0), were significantly lower in the case of treatment 3 and the presence of slime or collapsed containers was not observed. These results seem to indicate that the addition of citrus biomass (500 g/T) together with the supplement of the invention at 2% prevents colour degradation in chicken breast meat samples and prevents the appearance of quality losses thereof.

## Claims

1. A food supplement for animals based on a raw garlic extract (*Allium sativum*)*,* **characterised by** containing, from 1 to 10% by weight with respect to the total mass of the supplement, non-volatile cysteine-derived sulphur compounds consisting of γ-glutamyl-S-allylcysteine, N-γ-glutamyl-S-(1-propenyl)cysteine, γ-glutamyl-S-allylthiocysteine, N-acetyl-S-(N-methylcarbamoyl)cysteine, γ-L-glutamyl-S-(2-carboxy-1-propyl)cysteinylglycine, alliin, S-methylcysteine, propane-1-sulfonothioic acid and N-acetylmethionine sulfoxide and by not containing allicin.

2. The food supplement for animals according to claim 1, **characterised by** a non-volatile cysteine-derived sulphur compound content of 1 to 10% of the total mass of the supplement and according to the following biochemical profile:
| Non-volatile cysteine-derived sulphur compounds | mg/kg of supplement |
|---|---|
| γ-Glutamyl-S-allylcysteine | 10000-50000 |
| N-γ-glutamyl-S-(1-propenyl)cysteine | 8000-24000 |
| γ-glutamyl-S-allylthiocysteine | 4000-12000 |
| N-acetyl-S-(N-methylcarbamoyl)cysteine | 200-400 |
| γ-L-glutamyl-S-(2-carboxy-1-propyl)cysteinylglycine | 200-400 |
| Alliin | 100-300 |
| S-methylcysteine | 100-200 |
| Propane-1-sulfonothioic acid | 100-200 |
| N-acetylmethionine sulfoxide | 50-150 |
| Total (mg/kg) | 22750-87650 |
| % (total mass) | 2.3-8.8% |

3. The food supplement for animals according to claim 2, **characterised by** a non-volatile cysteine-derived sulphur compound content of 5.1% of the total mass of the supplement of the invention and according to the following biochemical profile:
| Non-volatile cysteine-derived sulphur compounds | mg/kg of supplement |
|---|---|
| γ-Glutamyl-S-allylcysteine | 25777 |
| N-γ-glutamyl-S-(1-propenyl)cysteine | 16414 |
| γ-glutamyl-S-allylthiocysteine | 7736 |
| N-acetyl-S-(N-methylcarbamoyl)cysteine | 362 |
| γ-L-glutamyl-S-(2-carboxy-1-propyl)cysteinylglycine | 291 |
| Alliin | 193.2 |
| S-methylcysteine | 187 |
| Propane-1-sulfonothioic acid | 144 |
| N-acetylmethionine sulfoxide | 111 |
| Total (mg/kg) | 51,215.2 |
| % (total mass) | 5.1 |

4. A preparation method of the supplement according to the preceding claims, **characterised by** the following steps:
i. first subjecting peeled garlic bulbs to a cold pressure process to obtain a liquefied garlic juice, which is filtered to remove solid residues and
ii. mixing the garlic juice obtained in i) with a solution in diluted acetic acid of cysteine, glutamic acid and citric acid to obtain a liquid mixture with a pH below 4, optionally with the addition of flavourings,
iii. homogenising the mixture obtained in ii) until complete cytolysis at differential pressures of 100 to 600 bar.

5. The method according to claim 4, **characterised in that** the acetic solution of cysteine, glutamic acid and citric acid, and optionally flavourings, is a solution of these components in apple cider vinegar.

6. Use of the supplement according to claims 1-3 in a dose of 0.5 to 2% in drinking water or mixed with animal feed to reduce the incidence of vascular lesions on the surface of the breast meat of poultries fed with a basal diet, with this effect being greater than the effect of acetylsalicylic acid at the recommended doses (0.5 g/l of a concentrated medicinal product at 650 mg/g).

7. Use of the supplement according to claim 6 together flavonoids in animal diet.
